# EUROPEAN PATENT APPLICATION

(11) **EP 3 225 683 A1**
(43) Date of publication of application: **04.10.2017**
(21) Application number: 16163061.1
(22) Date of filing: 30.03.2016
(51) Int. Cl.: C12C 11/11, C12C 13/10, C12G 3/00, B67D 1/04, B67D 1/00

(54) **KIT FOR THE IN SITU PRODUCTION OF A FERMENTED TARGET BEVERAGE BY ADDITION OF A LIQUID DILUENT**

(71) Applicant: Anheuser-Busch InBev S.A., 1000 Brussels (BE)
(72) Inventor: The designation of the inventor has not yet been filed
(74) Representative: BiiP cvba

(57) **Abstract**

The present invention concerns a kit of parts for the *in situ* production of a fermented target beverage by addition of a liquid diluent (3), said kit of parts comprising:
(c) A first chamber (1) containing concentrated beverage extracts, and
(d) A second chamber (2), fluidly separated from the first chamber, containing ethanol of at least 80 vol.% purity,

Characterized in that, the ethanol of the second chamber contains CO₂ or N₂ at saturation concentration at a temperature of 25°C and at a pressure of at least 2 bar (= 1 bar over atmospheric pressure).The present invention also concerns a dispensing apparatus and a method for the in situ preparation and dispensing of a fermented target beverage, using the foregoing kit of parts.

## Description

### TECHNICAL FIELD

The present invention relates to unit doses for use with a beverage dispensing apparatus, for forming and dispensing a fermented beverage by addition of a liquid diluent. In particular the fermented beverage can be a malt based beverage, such as beer, or a cider, or a wine. The liquid diluent can be still water.

### BACKGROUND FOR THE INVENTION

There is presently a trend to fancier kinds of beverages, wherein multiple beverage components or beverages are added to one another so that consumers can create at home their own compositions adapted to their tastes. This trend also applies to fermented beverages, such as malt based fermented beverages, like beers of various flavours and types. One way of offering the consumers such possibility is to provide the various components and flavours of a beverage concentrated in a unit dose such as a capsule or a pad, to which a liquid diluent is added and mixed in order to create *in situ* the desired beverage simultaneously as it is being served. The addition and mixing of the liquid diluent to the unit dose is generally carried out in a dispensing apparatus.

Examples of dispensing apparatuses of this type are coffee dispensers, where hot water is forced to percolate under pressure through a coffee powder bed contained in such unit dose before being served. Similar dispensing apparatuses exist for brewing tea. Another example of such dispensing apparatuses are soda machines, often used in fast food restaurants and other places where a consumer can fill its glass with a soda of his choice out of a selection of sodas, all available from the same dispenser. In such soda dispensers, syrups which are concentrated versions of the target soda contained in various pouches, are mixed with sparkling water upon dispensing the target soda thus formed. Such soda dispensers are advantageous because the syrups pouches are of much smaller dimensions than a corresponding ready to drink soda, and thus much cheaper to ship and to store.

Many brewers have been tempted to implement with fermented beverages the same dispensing solution as for sodas, but to date with very limited to no success. One reason for these repeated failures is probably that fermented beverages are more difficult to concentrate and preserve over long periods than soda syrups. Indeed, rapid degradation of the proteins contained in beer concentrates has been observed, which never happened with soda syrups.

It would be desirable to provide a solution for providing unit doses for *in situ* creating and dispensing a fermented beverage, preferably a malt based fermented beverage, such as beer, which have a long shelf life. It would also be desirable to provide such a solution wherein the liquid diluent is still water, so that no pressurized gas bottle is required to create the target beverage. The present invention proposes a solution meeting such objectives. These and other objects of this invention will be evident when viewed in light of the drawings, detailed description, and appended claims.

### SUMMARY OF THE INVENTION

The present invention is defined in the appended independent claims. Preferred embodiments are defined in the dependent claims. In particular, the present invention concerns a kit of parts for the in situ production of a fermented target beverage by addition of a liquid diluent (3), said kit of parts comprising: (a) A first chamber (1) containing concentrated beverage extracts, and (b) A second chamber (2), fluidly separated from the first chamber, containing ethanol of at least 80 vol.% purity, characterized in that, the ethanol of the second chamber contains CO2 and/or N2 at saturation concentration at a temperature of 25°C and at a pressure of at least 2 bar (= 1 bar over atmospheric pressure)

The present invention also concerns a method for producing a target beer in situ and dispensing said fermented target beverage, the method comprising the following steps:(a) providing a dispensing apparatus as defined in claim 6(a) to (d), and connecting the upstream end (5u) of the tubing system to a source of liquid diluent (3), (b) loading both first chamber (1) and second chamber (2) in their housing (12), (c) flowing the liquid diluent from the upstream end to the downstream end of the tubing system, through both first and second chambers, and (d) recovering the thus produced fermented target beverage in a vessel (10)

### BRIEF DESCRIPTION OF THE FIGURES

For a fuller understanding of the nature of the present invention, reference is made to the following detailed description taken in conjunction with the accompanying drawings in which:
**Figure 1****:** shows various embodiments of dispensing apparatuses according to the present invention, comprising a unit dose comprising first and second chambers.
**Figure 2****:** shows the saturation concentration of CO₂ in water and ethanol (EtOH) depending on pressure at a temperature of 298°K.
**Figure 3****:** shows the relationship between the saturation concentration of CO2 in water and ethanol at a pressure of 1 bar and a temperature of 298°K.
**Figure 4****:** shows an example of (a) loading a unit dose into a dispensing apparatus and (b) creating *in situ* and dispensing a fermented target beverage.

### DETAILED DESCRIPTION OF THE INVENTION

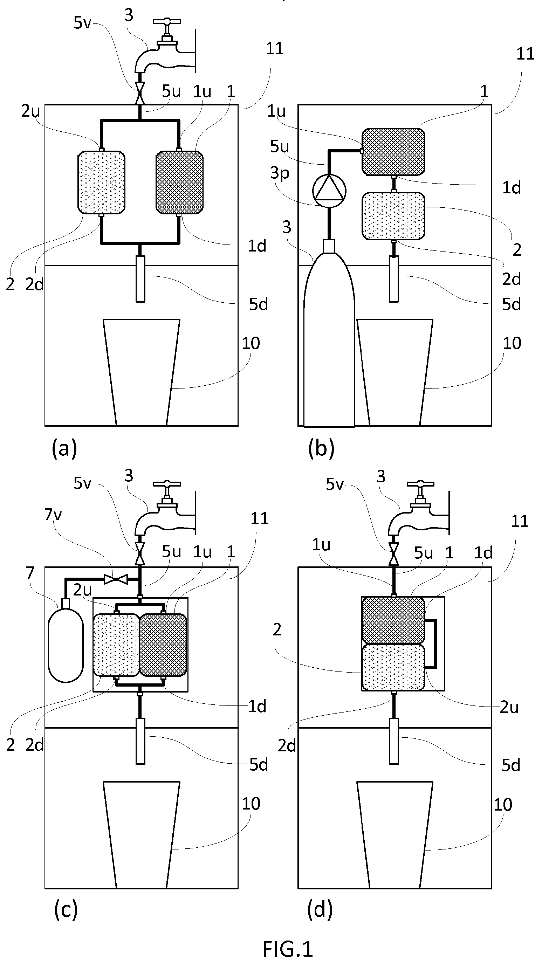

As shown in Figure 1, the problem of short shelf life of unit doses of concentrated beer has been solved by splitting the unit doses into first and second chambers (1, 2). The first chamber (1) contains concentrated beverage extracts and the second chamber (2) contains ethanol. The second chamber also contains gaseous carbon dioxide, CO₂, or nitrogen, N₂, at saturation concentration at a temperature of 25°C and at a pressure of at least 2 bar (= 1 bar over atmospheric pressure).

The concentrated beverage extracts contained in the first chamber (1) can be obtained by producing a fermented beverage in a traditional manner (e.g., for a beer, by brewing it in any fashion known in the art), followed by concentrating the thus produced fermented beverage. Concentration occurs by removing, on the one hand, a fraction of the water contained therein and, on the other hand, a fraction of the ethanol contained therein. A substantial amount of both water and ethanol can be removed from the beverage by filtration, micro-filtration, ultra-filtration, or nano-filtration, using appropriate membranes well-known to a person skilled in the art. It is desirable to remove substantially all the ethanol contained in the beverage. Indeed, the inventors have discovered that yeasts still present in the beverage and proteins contained in a concentrate of a fermented beverage degrade more rapidly in presence of ethanol. This is one reason for separating the unit doses into a first chamber devoid of ethanol and a second chamber containing ethanol.

If substantially all the water is removed during the concentration process of the beverage, then substantially all the ethanol is removed too. On the other hand, it is possible to keep between 0.5 and 50 vol.%, preferably between 10 and 40 vol.% of water content in the first chamber. In this case, it is necessary to remove any ethanol mixed with the remaining water. Ethanol can be removed from the remaining water by distillation.

The second chamber contains ethanol and gaseous CO₂ or N₂. Ethanol contained in the secnd chamber must a purity of at least 80 vol.%, preferably at least 90 vol.%, more preferably at least 95 vol%, most preferably at least 98 vol.%.

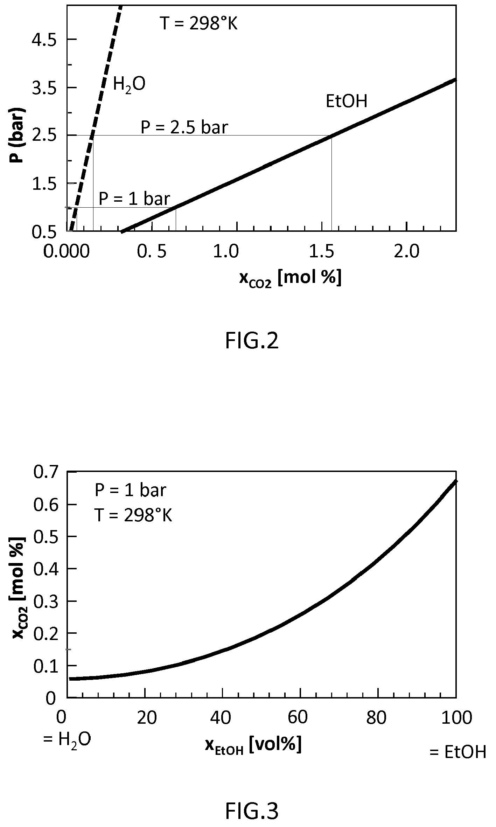

. Including gaseous CO₂ or N₂ in the unit dose permits to make without a source of pressurized gas in the dispensing apparatus or, as illustrated in Figure 1(c), the use of a source of pressurized gas (7) merely for adjusting the final desired level of gas in the beverage to be dispensed. Referring to Figure 3 illustrating the CO₂ saturation concentration in a water-ethanol mixture at a temperature of 298°K as a function of ethanol concentration. The abscissa x_{EtOH} = 0% corresponds to pure water, and x_{EtOH} = 100% corresponds to pure ethanol. It can be seen that CO₂ saturation concentration in ethanol is about one order of magnitude higher than in water. This means that about ten times more carbon dioxide can be dissolved in pure ethanol as in a same volume of pure water. For this reasons, for target beverages having an ethanol contents of at least 5 vol.%;, it is possible to include in the second chamber all the CO₂ required for the target beverage at a reasonable pressure in the second chamber of 1 to 4 bar above atmospheric pressure.

For example, the ethanol of the second chamber contains:
- CO₂ at a concentration, x_{CO2}(EtOH), comprised between 1.0 and 3.0 mol.%, preferably between 1.5 and 2.5 mol.%, with respect to the total content of the second chamber.

If the first chamber contains some water, such as 10 to 40 vol.% water, then it is also possible to dissolve gaseous CO₂ or N₂ in said water contained in the first chamber. This can contribute to achieving more bubbles in the target beverage. This can be particularly useful in case of a target beverage having a low ethanol content. Referring to Figure 2, showing the molar %-saturation concentration of CO₂ at 298°K as a function of pressure. Depending on the amounts of ethanol and of gas desired in the target beverage, gas concentrations and pressures in the second and, optionally the first chambers can be determined.

the water of the first chamber contains:
- CO₂ at a concentration, xCO₂(H₂0), comprised between 1,0 and 3,0 mol.%, preferably between 1.5 and 2.5 mol.%, with respect to the total water content of the first chamber.

Finally, as illustrated in Figure 1(c), the final gas content in the target beverage can be tuned with an external source of pressurized gas (7). This of course requires the use of an additional consumable, which is detrimental to the comfort of use of a dispensing apparatus, but since the source of pressurized gas is merely used for fine tuning the final content of gas in the target beverage, the gas consumption is very limited and one charge can last a long time.

The liquid diluent (3) generally comprises water, and can be pure water only. By pure water, it is meant water containing minerals rendering it drinkable. In particular, the liquid diluent can be still water, illustrated in Figure 1(a), (c)&(d) by a tap, but it can of course be contained in a reservoir or other container. A dispensing apparatus for dispensing a fermented beverage such as beer, and using unit doses requiring no additional source of gas and using pure water as liquid diluent is of course most comfortable for the end users.

Alternatively, the liquid diluent (3) can be a base liquid, for example having a neutral flavour profile which, when mixed with different types of concentrated beverages of the first chamber and with the ethanol of the second chamber yields a large variety of target beverages. Such embodiment is illustrated in Figure 1(b) wherein a bottle containing a liquid diluent (3) is used. For example, the liquid diluent can be a base beer without any flavouring highlights, and the first chamber is available in a variety of flavours, such as cherry beer, dark abbey beer, amber abbey beer, stout, etc. With a single supply of base beer, it is possible to yield a large variety of target beers by mixing said base beer with a unit dose comprising a second chamber filled with ethanol and a gas, and a first chamber comprising a corresponding variety of flavoured concentrated beverage extracts. Comparing it to a painting, the base beer forms a background tone of the painting, and the flavoured concentrated beverage extracts yields the coloured central subject of the picture.

The concentrated beverage extracts contained in the first chamber preferably comprise various amounts of ethyl acetate, isoamyl acetate, ethyl butyrate, and ethyl hetanoate. These are the major flavouring compounds of beer, which concentration profile gives each beer its own characteristic flavour profile. As explained above, it is preferred that the concentrated beverage extracts be produced by removing a fraction of the water and most (or all) of the ethanol of a conventionally brewed beer. Alternatively, or concomitantly, it can be produced or completed by addition of flavouring compounds

As illustrated in Figure 1(a)&(b), the first and second chambers can be provided as two separate units, which have to be loaded individually into a dispensing apparatus. This can be advantageous if the end user wishes to control the amount of ethanol in its target beverage. Each unit of the first and second chamber (1, 2) has an inlet connection (1u, 2u) and an outlet connection (1 d, 2d), which can be coupled to an upstream and downstream ends (5u, 5d) of a dispensing tube. It is, however, more inconvenient having to load two dose units sequentially before being able to dispense a target beverage.

Alternatively, as illustrated in Figure 1(c)&(d), the first and second chambers can be provided as two separate chambers in a single unit. This gives no choice with respect to the proportion of ethanol in the target beverage, but is easier to use, as the end user only needs to load a single unit into the dispensing apparatus, as is usual in coffee machines. As shown in Figure 1(c)&(d), the two chambers in a single unit dose can be fluidly coupled in series or in parallel by internal tubing initially closed by a membrane, until the pressure of the liquid diluent burst open said membrane. Alternatively, the introduction of a dose unit containing first and second chambers, moves the said first and second chambers and piercing said membrane upon bringing them into contact.

As its name indicates, a dose unit corresponds to one serving of beverage. Depending on the country and type of beverage, one serving can be a glass (10) of capacity generally comprised between 20 and 50 cm³ (1 cm³ = 0.1 cl). It follows that for a target beverage having an ethanol content of 5 vol.%, the second chamber (2) must therefore have a capacity of 10 cm³ for a 200 cm³ target beverage, of 17 cm³ for a 330 cm³ target beverage, and 25 cm³ for a target beverage of 500 cm³ (0.5 l). Similarly, a 500 cm³ target beverage having a 9 vol.% ethanol content requires a first chamber of 45 cm³ capacity. The larger the second chamber, the larger the amount of CO₂ or N₂ which can be stored, and the larger the alcohol content of the target beverage.

The volume of the first chamber (1) may vary more than the one of the second chamber, depending on the amount of water still present in the first chamber. For a first chamber containing not more than 5 vol.% water, the capacity of the first chamber can be comprised between 10 and 50 cm³. For a first chamber comprising between 20 and 40 vol.% water, the capacity of the first chamber can be of the order of 50 to 150 cm³.

As illustrated in Figure 1, the present invention also concerns a dispensing apparatus for producing *in situ* a fermented target beverage by addition of a liquid diluent, and for dispensing the thus produced fermented target beverage. The dispensing apparatus of the present inventioncomprises:
(a) a housing (1 2) for receiving the first chamber (1),
(b) a housing (12) or receiving the second chamber (2),
(c) a dispensing tubing system (5d, 5u) comprising an upstream end (5u) and a downstream end (5d), the upstream end being coupled to a source of liquid diluent, and fluidly connecting said source of liquid diluent, to the housing for receiving the first chamber, to the housing for receiving the second chamber, and to the downstream end (5d) of the dispensing tube, which is open to an outer atmosphere.

A first chamber and a second chamber as discussed supra are loaded in a respective housing, such that the liquid diluent (3) flowing from the upstream end (5u) to the downstream end (5d) of the dispensing tubing system must flow through the interior of both first and second chambers (1, 2).

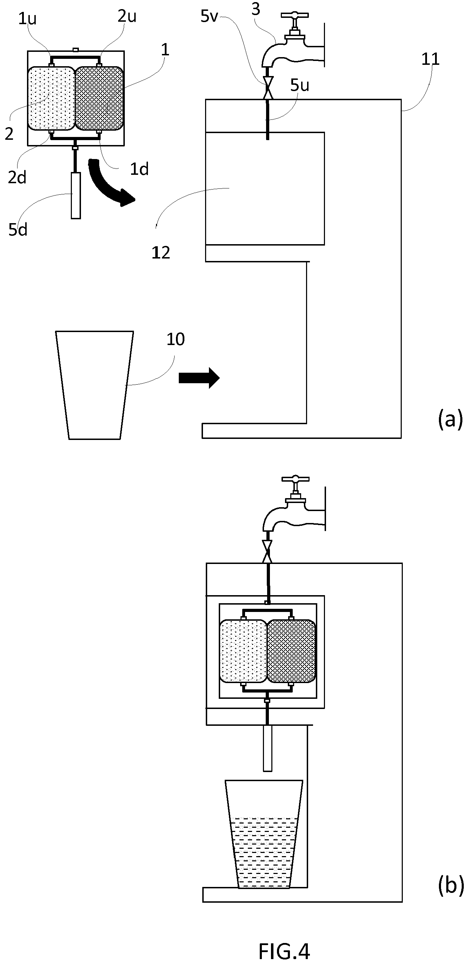

The dispensing apparatus can comprise two different housings (12) fluidly connected to one another for receiving the first and second chambers separately. Alternatively, as shown in Figure 4, a single housing (12) can be used to receive either a single unit dose comprising both first and second chambers, or two separate first and second unit doses, each containing the first and second chambers, respectively. Figure 1(a)&(b) show examples wherein two separate unit doses are used, and Figures 1(c)&(d) and 4 show examples of apparatuses receiving a single unit dose containing both first and second chambers.

For hygienic reasons and ease of use, a unit dose as illustrated in Figure 4(a) can comprise first and second chambers as well as the downstream end (5d) of the dispensing tubing system. The unit dose can be loaded in the housing of the dispensing apparatus, a glass or other vessel of appropriate capacity is placed below the downstream end of the dispensing tubing system. This way, every time a new unit dose is loaded in the dispensing apparatus, a new and clean downstream end (5d) of the dispensing tube is used. The upstream end of dispensing tubing system (5u) must also be changed at regular intervals, but since the same liquid diluent is used for each serving, it needs not be changed after each helping. This is particularly true in case the diluent liquid is still water, which is a preferred embodiment.

Downstream of the first and second chambers, the dispensing tubing system may comprise a mixing chamber for mixing the liquid diluent with the concentrated beverage extracts, ethanol, and gas. The mixing chamber can comprise moving element to dynamically mix the components or, alternatively, it may be a static mixer or simply a sharp curving portion in the downstream end of the dispensing tubing system. If a mixing chamber is used, care must be taken to select a mixing mechanism which does not generate excessive amounts of foam due to the presence of gaseous CO₂ or N₂.

The present invention also concerns a method for producing a fermented target beverage *in situ* and dispensing said fermented target beverage. An example of the method is illustrated in Figure 4, the method comprising the following steps:
(a) providing a dispensing apparatus as discussed supra, and connecting the upstream end (5u) of the tubing system to a source of liquid diluent (3),
(b) loading both first chamber (1) and second chamber (2) in their housing (12),
(c) flowing the liquid diluent from the upstream end to the downstream end of the tubing system, through both first and second chambers, and
(d) recovering the thus produced fermented target beverage in a vessel (10).

Using the apparatus of the present invention according to the foregoing method and using the unit doses discussed supra, allows the *in situ* preparation of a large variety of fermented beverages, in amounts corresponding to one glass of beverage, of capacity comprised between 200 and 500 cm³ (= 20 - 50 cl). The thus prepared fermented target beverage may comprise between 4 and 9 vol.% ethanol, and between 1 and 6 g / l of CO₂ and/or N₂ (typical ration CO₂/N₂ is about 3/1), by simply loading a unit dose into the dispensing apparatus and flowing the liquid diluent through the unit dose. In a most preferred embodiment, the liquid diluent is still water, and no additional source of pressurized gas is required. The latter is made possible by taking advantage of the substantially higher solubility of gases such as CO₂ or N₂ in ethanol compared to water, or to a 4 to 9 vol.% ethanol solution in water (cf. Figures 2&3).

Alternatively, the liquid diluent is not still water only, but a base beverage contained in a vessel (cf. Figure 1(b)). This solution allows the creation of a large variety of beverages around the theme of the base beverage. A selection of base beverages with various flavour profiles can also be provided to further increase the creative possibilities of the end user. In yet another embodiment, an additional source of pressurized gas (7) can be used to fine tune the gas content in the thus produced fermented beverage.

| **REF** | **DESCRIPTION** |
|---|---|
| 1 | First chamber |
| 1d | Outlet of first chamber |
| 1u | Inlet of first chamber |
| 2 | Second chamber |
| 2d | Outlet of second chamber |
| 2u | Inlet of second chamber |
| 3 | Source of liquid diluent |
| 3p | Pump for liquid diluent |
| 5d | Outlet of dispensing tube |
| 5u | Inlet of dispensing tube |
| 5v | Valve for liquid diluent |
| 7 | Source of pressurized gas (CO₂ or N₂) |
| 7v | Valve for pressurized gas |
| 10 | Vessel for collecting the in situ created beverage |
| 11 | Dispensing apparatus |
| 12 | Housing(s) for receiving first and second chambers |

## Claims

1. A kit of parts for the *in situ* production of a fermented target beverage by addition of a liquid diluent (3), said kit of parts comprising:
(a) A first chamber (1) containing concentrated beverage extracts, and
(b) A second chamber (2), fluidly separated from the first chamber, containing ethanol of at least 80 vol.% purity,
**Characterized in that,** the ethanol of the second chamber contains CO₂ and/or N₂ at saturation concentration at a temperature of 25°C and at a pressure of at least 2 bar (= 1 bar over atmospheric pressure).

2. The kit of parts according to claim 1, wherein the ethanol contained in the second chamber has a purity of at least 90 vol.%, preferably at least 95 vol%, more preferably at least 98 vol.%.

3. The kit of parts according to claim 1 or 2, wherein the ethanol of the second chamber contains:
• CO₂ at a concentration, x_{CO2}(EtOH), comprised between 1.0 and 3.0 mol.%, preferably between 1.5 and 2.5 mol.%, with respect to the total content of the second chamber.

4. The kit of parts according to any one of the preceding claims 1 to 3, wherein the liquid diluent is still water only.

5. The kit of parts according to claim 3, wherein the first chamber contains still water in an amount comprised between 10 and 40 vol.% of water with respect to the total content of the first chamber.

6. The kit of parts according to claim 5, wherein the water of the first chamber contains:
• CO₂ at a concentration, x_{CO2}(H₂0), comprised between 1,0 and 3,0 mol.%, preferably between 1.5 and 2.5 mol.%, with respect to the total water content of the first chamber.

7. The kit of parts according to any of the preceding claims, wherein the concentrated extracts contained in the first chamber is obtained by the at least partial separation from said target beer of water and ethanol, and include ethyl acetate, isoamyl acetate, ethyl butyrate, and ethyl hetanoate.

8. The kit of parts according to any of the preceding claims, wherein the first and second chambers are provided as two separate units.

9. The kit of parts according to anyone of claims 1 to 6, wherein the first and second chambers are provided as two separate chambers in a single unit.

10. The kit of parts according to any of the preceding claims, wherein the volume ratio of the volume of the second chamber to the volume of the first chamber is comprised between 20% and 100%, and wherein the first chamber preferably has a volume comprised between 20 and 50 cm³, and wherein the second chamber preferably has a volume comprised between 10 and 50 cm³.

11. A dispensing apparatus for producing *in situ* a fermented target beverage by addition of a liquid diluent, and for dispensing the thus produced fermented target beverage, said dispensing apparatus comprising:
(d) a housing for receiving the first chamber,
(e) a housing for receiving the second chamber,
(f) a dispensing tubing system comprising an upstream end (5u) and a downstream end (5d), the upstream end being coupled to a source of liquid diluent, and fluidly connecting said source of liquid diluent, to the housing for receiving the first chamber, to the housing for receiving the second chamber, and to the downstream end (5d) of the dispensing tube, which is open to an outer atmosphere,
**characterized in that,** a first chamber and a second chamber as defined in any of the preceding claims are loaded in a respective housing, such that the liquid diluent flowing from the upstream end to the downstream end of the dispensing tubing system must flow through the interior of both first and second chambers.

12. The dispensing apparatus according to claim 6, wherein the source of liquid diluent is a source of still water only.

13. The dispensing apparatus according to claim 6 or 7, wherein the first and second chambers are loaded in a single housing or in two separate housings, wherein the two separate housings are fluidly connected to the source of liquid diluent by the dispensing tubing system, either in series or in parallel.

14. Method for producing a target beer *in situ* and dispensing said fermented target beverage, the method comprising the following steps:
(e) providing a dispensing apparatus as defined in claim 6(a) to (d), and connecting the upstream end (5u) of the tubing system to a source of liquid diluent (3),
(f) loading both first chamber (1) and second chamber (2) in their housing (12),
(g) flowing the liquid diluent from the upstream end to the downstream end of the tubing system, through both first and second chambers, and
(h) recovering the thus produced fermented target beverage in a vessel (10).

15. Method according to claim 12 or 13, wherein a kit of first and second chambers are designed to serve between 200 and 500 cm³ of a fermented target beverage containing between 4 and 9 vol.% ethanol, and between 1 and 6 g / I of CO₂, by flowing a predetermined volume of liquid diluent.
